Europäisches Patentamt

European Patent Office

Office européen des brevets

(11) Veröffentlichungsnummer : **0 183 219**
**B1**

(12) **EUROPÄISCHE PATENTSCHRIFT**

(45) Veröffentlichungstag der Patentschrift :
09.11.88

(21) Anmeldenummer : 85114939.3

(22) Anmeldetag : 26.11.85

(51) Int. Cl.⁴ : **F 16 B 12/40**, F 16 B 7/04,
A 47 B 96/14, E 04 B 1/58,
E 04 G 7/12

(54) Verbindungsanordnung für wenigstens drei entlang der Raumachse verlaufende Streben.

(30) Priorität : 28.11.84 CH 5672/84

(43) Veröffentlichungstag der Anmeldung :
04.06.86 Patentblatt 86/23

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
EP-A- 0 007 146
EP-A- 0 053 582
AU-B- 462 859
CH-A- 582 836
DE-A- 2 348 239
DE-A- 2 520 510
DE-A- 3 320 489
DE-B- 2 806 764
GB-A- 1 562 665
US-A- 556 194
US-A- 4 145 149

(73) Patentinhaber : Hirzel, Paul H.
Palmstrasse 19
CH-8400 Winterthur (CH)

(72) Erfinder : Schnell, Raimund, Dipl. Ing.
Hans-Saxer-Strasse 9
CH-9451 Eichberg SG (CH)

(74) Vertreter : Riebling, Peter, Dr.-Ing.
Patentanwälte Dr.-Ing., Dipl.-Ing., Ing.(grad.) Günter
Riebling Dr.-Ing., Dipl.-Ing. Peter Riebling Rennerle
10 Postfach 3160
D-8990 Lindau (DE)

## Beschreibung

Die Erfindung bezieht sich auf eine Verbindungsanordnung für wenigstens drei entlang der Raumachsen verlaufende Streben, bestehend aus zwei mit einer Außenfläche einem einfachen geometrischen Körper folgenden, miteinander verbindbaren Halteteilen, deren jeweils einander zugekehrte Seite aus einer Schnittfläche durch den geometrischen Körper geformt ist, wobei die Halteteile entlang der Raumachsen verlaufende Bohrungsausnehmungen zur Aufnahme der Streben aufweisen, deren Achsen einander kreuzen, und durch welche Bohrungsausnehmungen jeder Halteteil einen etwa dreiarmigen Körper bildet.

Es versteht sich, daß dabei der Ausdruck « entlang der Raumachsen » bedeutet, daß die Achsen zueinander jeweils einen rechten Winkel, jedoch räumlich nach verschiedenen Richtungen einschlagen. Unter dem Begriff « Bohrungsausnehmungen » ist zwar bevorzugt eine Zylinderbohrung verstanden, doch soll die Erfindung nicht auf diese Querschnittsform beschränkt sein. Unter dem Begriff « Streben » im Sinne der Erfindung sind Voll- oder Hohlprofile beliebigen Querschnitts, wie z. B. Stangen, Rohre od. dgl. zu verstehen. Wenn hier von « Schnitten » gesprochen wird, dann ist dies immer geometrisch zu verstehen, d. h. es sind die betreffenden Teile nicht notwendigerweise aus einem größeren Körper durch faktisches Abschneiden herzustellen.

Mit der obigen Definition wird ein dreiarmiger Körper umrissen, der gemäß einem bekannten Vorschlag (siehe z. B. AU-B-462859) von einem einfachen geometrischen Körper, nämlich einer Kugel, ausging. Dies ergab dann für jeden Halteteil eine Kugelkalotte, die dadurch zu einem dreiarmigen Körper wurde, daß die drei Bohrungen gewissermaßen sekantenartig durch den Kugelkörper verliefen und die Kugelkalotte an ihrem dem anderen Halteteil zugekehrten Grundkreis entsprechend aushöhlten. Die Arme beider Halteteile griffen ineinander und umschlossen die Streben daher um mehr als 360 Grad. Im Prinzip hat sich eine derartige Verbindungsanordnung sehr gut bewährt, denn sie besteht aus wenigen Teilen, die relativ leicht zu fertigen sind, und ergibt jeweils sehr stabile Verbindungen für Rahmen-Eckverbindungen aller Art. Gerade aber für Regalbauten, Möbel u. dgl. ergab sich bisher für Regalbretter, Querwände und ähnliches die Notwendigkeit, für die Kugelkalotte eine entsprechende Ausnehmung in das Brett zu formen, wenn dieses satt an dem durch die Rohre oder Stangen gebildeten Rahmen anliegen sollte. Überdies war die Montage bzw. Demontage nicht einfach, denn es mußte jeweils das ganze Verbindungselement auseinandergenommen werden.

Der Erfindung liegt daher die Aufgabe zugrunde, die Nachteile einer Verbindungsanordnung der eingangs genannten Art zu vermeiden. Dies gelingt erfindungsgemäß dadurch, daß der einfache geometrische Körper ein würfelartiger Körper ist, von dem zur Bildung eines Halteteiles an den Endpunkten einer Raumdiagonale je eine Eckpyramide abgeschnitten ist und ein weiterer Schnitt zur Ausbildung der dem jeweils anderen Halteteil zugekehrten Fläche durch eine im Abstand von der Pyramidengrundfläche verlaufende Trennebene gelegt ist, die senkrecht zu der Raumdiagonale verläuft, und wobei in jedem Halteteil die von der Trennebene ausgehenden, im Querschnitt einem Segment der Streben entsprechenden Bohrungsausnehmungen angeordnet sind.

Durch diese Ausbildung wird nicht nur die oben definierte Aufgabe gelöst, sondern zusätzlich eine Material- und Gewichtsersparnis erzielt, die letztlich auch eine Verbilligung des Verbindungselementes ergibt. Durch die ebene dreieckige Grundfläche der abgeschnittenen Eckpyramide ergibt sich eine kompakte Ausbildung, die das satte Auflegen von Regalbrettern nicht mehr behindert. Dennoch verbleiben drei die Rohre oder Stangen umgreifende stabile Arme von annähernd dreieckigem Querschnitt. Gegenüber der bekannten Kalottenform werden zwar im allgemeinen die Stangen bzw. Rohre nicht über einen derart großen Winkelbereich (relativ zur Bohrungsachse) umgriffen, doch ist dies gerade deshalb vorteilhaft, weil dadurch die Montage und Demontage insoferne erleichtert wird, als die beiden Halteteile nur etwas gelockert werden müssen, um die Streben einzusetzen bzw. freizugeben.

Herstellungsmäßig und für den Gebrauch ist es günstig, wenn die beiden, geometrisch jeweils aus einem würfelartigen Körper gebildeten Halteteile gleich ausgebildet sind, was die Lagerhaltung und die Montage ebenso vereinfacht. An dieser Stelle sei darauf hingewiesen, daß der Begriff « würfelartiger Körper » zwar bevorzugt tatsächlich einen Würfel umschreibt, doch wird sich an Hand der späteren Beschreibung zeigen, daß leichte Abweichungen von der Würfelform noch durchaus in den Rahmen der Erfindung gehören. So ist es ebenso denkbar, von einem Quader oder einer ähnlichen Prismenform auszugehen, wie von einem Körper, dessen einander gegenüberliegende Flächen nicht vollkommen zueinander parallel sind.

Bevorzugt ist es, wenn die Bohrungsausnehmungen annähernd tangential zu jeweils zwei aneinander grenzenden Flächen des würfelartigen Körpers und innerhalb dieses verlaufen.

Es ist noch festzuhalten, daß dadurch, daß die drei zu verbindenden Streben auf Grund der Würfelform des Ausgangskörpers im allgemeinen von den drei Armen nicht völlig umgriffen werden, eine geringe Verdrehung oder Versetzung genügen mag, um den Halt der Streben zu verschlechtern, besonders wenn diese ein hohes Gewicht besitzen oder zu tragen haben. In diesem Falle empfiehlt es sich, wenn die beiden Halteteile an der einander jeweils zugekehrten Fläche mit ineinandergreifenden Vorsprüngen und Vertiefungen versehen sind. Dadurch wird die gegenseitige Lage der Halteteile fixiert und ein Öffnen der Klemmung der Streben unmöglich gemacht. Da die beiden Halteteile bezüglich der durch den Eckpunkt der abgeschnittenen Eckpyramide (der zugleich der Eckpunkt des würfelartigen Körpers ist) verlaufenden Raumachse des würfelartigen Körpers und gegeneinander in verschiedene Lagen bringbar sind, wovon nur eine Lage die richtige ist, wird die Montage weiter vereinfacht und erleichtert, wenn die Vorsprünge und Vertiefungen bezüglich der durch den Eckpunkt der abgeschnittenen Eckpyramide verlaufenden Raumachse des würfelartigen Körpers (diese Raumachse ist die Raumdiagonale des Würfels und gleichzeitig die Achse eines die Arme des verbleibenden dreiarmigen Körpers umgebenden Umkreises, falls die Arme gleich lang sind) rotationssymmetrisch angeordnet sind. Durch diese Asymmetrie können die Vorsprünge und Vertiefungen nur in einer einzigen Relativlage der beiden Haltekörper miteinander in Eingriff kommen, so daß ein Irrtum ausgeschlossen ist.

Obwohl die Verbindungseinrichtung an sich beliebig, beispielsweise auch in Form einer Schnapp- oder Bajonettverbindung an den einander zugekehrten Armen bzw. der Mittelfläche zwischen den beiden Halteteilen, schließlich aber auch durch je zwei Arme der beiden Halteteile verbindende Klemmen ausgebildet sein kann, ist es bevorzugt, wenn eine bolzenartige Verbindungseinrichtung, wie Schraubbolzen od. dgl., sich mit ihrer Längsachse entlang der durch den Eckpunkt der abgeschnittenen Eckpyramide verlaufenden Raumachse des würfelartigen Körpers erstreckt.

Für acht Streben, von denen vier ein in einer Ebene liegendes Viereck bilden und die anderen vier von den vier Eckpunkten des Vierecks ausgehend senkrecht von der Ebene abstehen, werden vier solcher Verbindungsanordnungen benötigt. Bei der bekannten Ausbildung waren alle vier Verbindungsanordnungen gleich, wodurch eine symmetrische Gestaltung des damit hergestellten Rahmens unmöglich war. Um daher zu einer symmetrischen und gleichmäßigen Bauweise zu kommen, kennzeichnet sich ein Satz von vier Verbindungsanordnungen der oben beschriebenen Art dadurch, daß je zwei Halteteilpaare spiegelbildlich zu den anderen zwei Halteteilpaaren ausgebildet sind.

Weitere Einzelheiten ergeben sich an Hand der nachfolgenden Beschreibung von in der Zeichnung schematisch dargestellten Ausführungsbeispielen. Es zeigen :

Fig. 1 eine axonometrische Darstellung eines von unten und einer Kante her gesehenen Würfels, aus dem der dreiarmige Körper eines Halteteiles entwickelt ist ;

Fig. 2 ein aus zwei derartigen Halteteilen zusammengesetztes Verbindungselement in Seitenansicht ;

Fig. 3 einen Halteteil in axonometrischer Ansicht entlang der Achse einer Bohrungsausnehmung ; und die

Fig. 4A, 4B und 5A, 5B jeweils spiegelbildlich ausgebildete Halteteile, und zwar in den Fig. 4 jeweils gesehen in Richtung des Verbindungsbolzens in axonometrischer Darstellung, in den Fig. 5 jeweils im Schnitt durch eine der Streben.

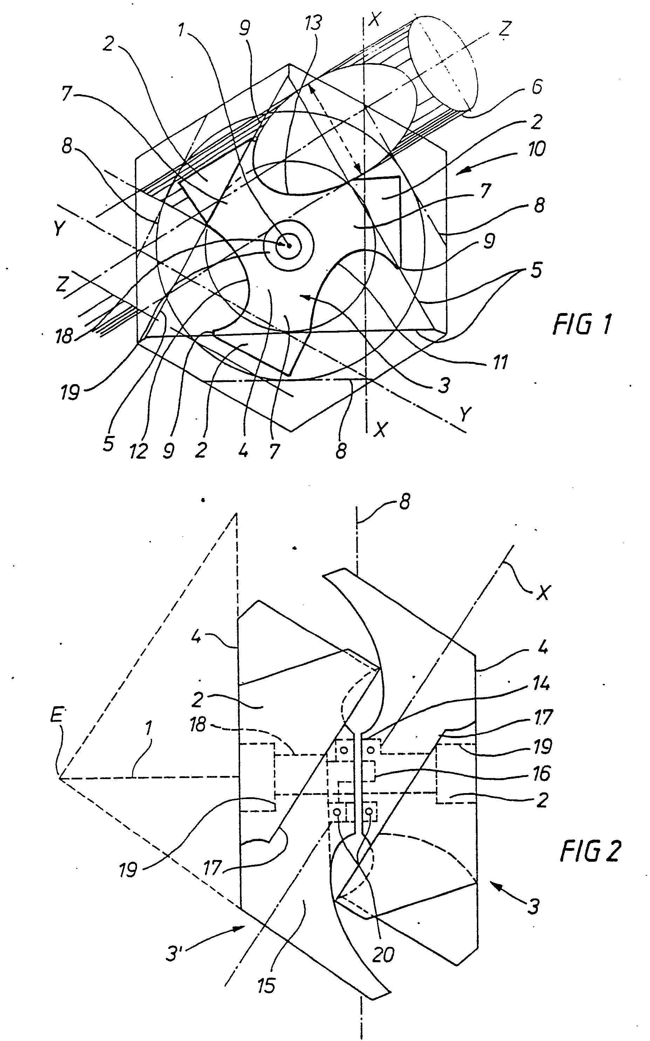

Um einen Halteteil 3 eines Verbindungselementes für drei zylindrische Streben (nur eine ist in Fig. 1 dargestellt) zu erhalten, wird eine der Hauptflächen 4 dieses Halteteiles 3 dadurch gebildet, daß von einem den Halteteil 3 einschließenden Würfel 10 eine Ecke abgeschnitten wird. Die (geometrische) Schnittführung verläuft dabei vorzugsweise so, daß diese Würfelecke als Dreieckspyramide abgeschnitten vorzustellen ist, deren Grundfläche durch die Seiten 5 gegeben ist. Das aus den Seiten 5 gebildete Dreieck ist vorzugsweise ein gleichseitiges und mithin die abgeschnittene Pyramide eine gerade, so daß letztlich die drei Arme 7 des Haltekörpers 3 auch gleichartig ausgebildet sind. Die Schnittführung versteht sich immer als geometrisch ; es muß nicht unbedingt bei der Herstellung eine Pyramide abgeschnitten werden. Für manche Anwendungszwecke kann auch eine schiefe Pyramide durchaus beabsichtigt und vorteilhaft sein.

Zweckmäßig verläuft die andere Fläche des Halteteiles 3, die — wie an Hand der Fig. 2 zu ersehen — dem anderen Halteteil 3' zugekehrt ist, beispielsweise entlang einer zur Fläche 4 parallelen Trennebene 8, wobei sich gegenüber dieser Trennebene 8 vorspringende oder zurücktretende Teile ergeben können. Diese Trennebene 8 verläuft vorteilhaft entlang einer Raumdiagonalen des Würfels 10, obwohl sie auch parallel zur Raumdiagonale, bzw. — insbesondere bei einer schrägen Eckpyramide — auch unter einem anderen Winkel als 45 Grad verlaufen könnte. Im übrigen wäre es an sich auch möglich, die dem jeweils anderen Halteteil 3 bzw. 3' zugekehrte Fläche völlig uneben auszubilden, beispielsweise die beiden Halteteile 3, 3' gegen den aus Fig. 2 ersichtlichen Eckpunkt E des Würfels bzw. der Eckpyramide hin konkav auszuhöhlen, doch wird dadurch keinerlei Vorteil erzielt, mit Ausnahme einer geringen Material- und Gewichtsersparnis, für die aber erhöhte Herstellungskosten in Kauf genommen werden müssen, soferne die Halteteile nicht etwa aus Kunststoff oder Leichtmetall gegossen werden.

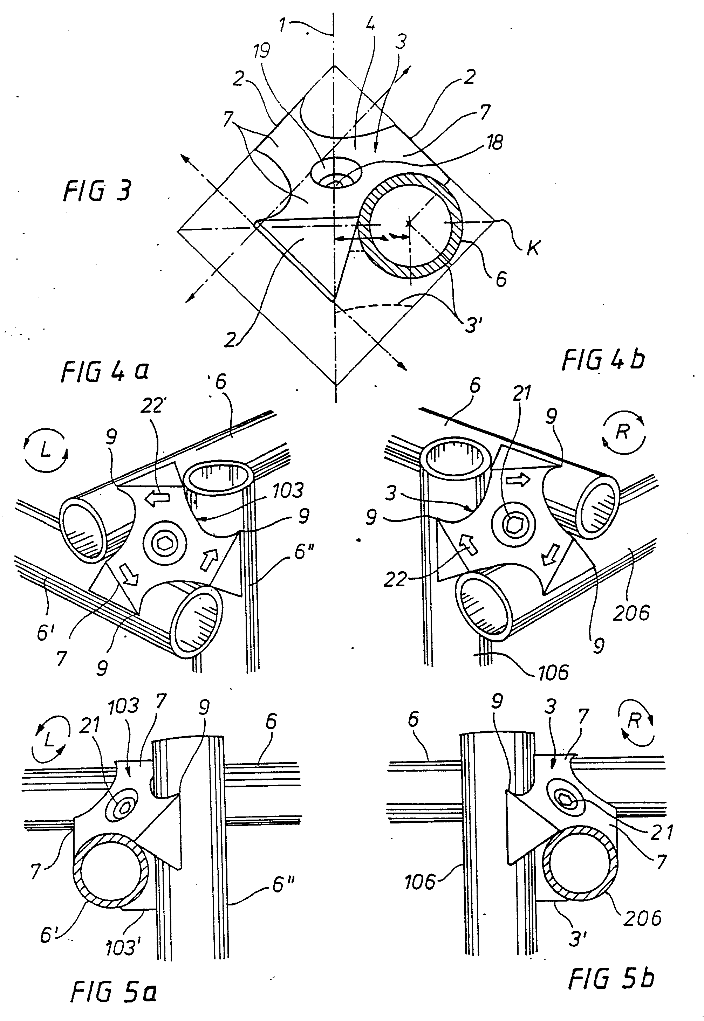

Der durch die Schnitte entlang den Ebenen 4 und 8 entstehende Körper wäre an sich — entsprechend etwa den Seiten 5 — in Draufsicht dreieckförmig. Legt man nun parallel zu drei untereinander einen rechten Winkel einschließenden Flächen und entsprechend den Raumachsen ausgerichteten Würfelflächen oder fluchtend mit diesen und in jedem Falle parallel zu den Würfelkanten verlaufend jeweils eine Achse x, y bzw. z zur Bildung einer Bohrungsausnehmung 11, 12 bzw. 13, so bleiben von dem zuerst gewonnenen Dreieckskörper nur mehr drei Arme 7 stehen, die jeweils eine einen Teil der vorherigen Würfelfläche bildende Außenfläche 2 besitzen. Je nach der Anordnung der drei Achsen x, y und z, wofür angesichts der sechs Würfelflächen zwei Möglichkeiten bestehen, sind die Arme 7 mit einer schärferen Spitze 9 bezüglich der durch den Eckpunkt E (Fig. 2) verlaufenden und mit der Höhe der Pyramide zusammenfallenden Würfeldiagonale 1 entweder im Uhrzeigersinn gerichtet, wie in Fig. 1, oder im Uhrzeigergegensinne. An Hand der Fig. 4 und 5 wird später noch erläutert, wie diese Tatsache vorteilhaft ausgenutzt werden kann.

Aus Fig. 2 geht hervor, daß der andere Halteteil 3' gegenüber dem Halteteil 3 winkelversetzt ist, und zwar genau um 180 Grad. Daher versteht es sich, daß er bei Teilung des Würfels 10 entlang der Teilungsebene 8 gemäß Fig. 1 an sich in denselben Würfel 10 eingepaßt sein könnte. Dementsprechend ist dann zur Bildung seiner Fläche 4 die der Würfelecke E diametral gegenüberliegende Ecke in Form einer Pyramide abzuschneiden. Dabei ergibt sich eine Dreiecksfläche, die dem Dreieck mit den Seiten 5 ähnlich bzw. kongruent ist. Die Spitze des Dreiecks weist — wie an Hand des Körpers 3 gezeigt — nicht nach oben, (während eine Seite 5 die Basis bildet), sondern nach unten. Gemäß Fig. 2 ergibt sich dann zwischen zwei einander gegenüberliegenden Flächen 2 der beiden Halteteile 3, 3' nicht nur (vorzugsweise) der Verlauf der einen Bohrungsachse x, sondern in einer Ebene oberhalb dieser (bezüglich der Zeichnungsebene) und parallel zur Achse x auch die gedachte Kante des Würfels. Diese Tatsache ist besonders deutlich in Fig. 3 zu erkennen, die einen Schnitt durch die Achse x und gleichzeitig die Kante K des Würfels zeigt. Analoge Verhältnisse ergeben sich natürlich auch für die beiden anderen Achsen y und z.

Wie erwähnt, sind bevorzugt die beiden Halteteile 3 und 3' völlig gleich ausgebildet, wie aus Fig. 2 ersichtlich. Entlang der Trennebene 8 verläuft dort eine Fläche 14 jedes der Halteteile 3, 3', mit welchen Flächen 14 die Halteteile 3, 3' aneinander anliegen. Prinzipiell ist dies aber nicht unbedingt erforderlich, vielmehr kann die Dimension der Bohrungsinnenfläche 15 auch dadurch erweitert werden, daß zwischen die Flächen 14 ein Abstandhalter, beispielsweise eine Beilagscheibe, eingelegt wird. Dies kann besonders von Vorteil sein, wenn die beiden Halteteile 3, 3' die rohrförmige Strebe 6 nicht über 270 Grad umfassen, wie in Fig. 3 angedeutet, sondern z. B. nur um 180 Grad. Es ist aber bevorzugt, wenn die Kantenlänge des würfelartigen Körpers und die Länge der Arme der Halteteile für einen gegebenen Bohrungsdurchmesser so bemessen sind, daß die Streben um maximal 360, vorzugsweise um 250 bis 300 Grad umschlossen werden.

An Stelle einer ebenen Fläche 14 können die beiden Halteteile 3, 3' aber auch mit — gegenüber der Trennebene 8 — vorspringenden bzw. vertieften Flächenteilen zahnartig ineinandergreifen, wie durch die strich-punktierte Linie 16 angedeutet ist. Dadurch wird gesichert, daß die Parallelität der beiden Begrenzungskanten 17 an den Flächen 2 der beiden Halteteile 3, 3' axakt eingehalten wird und nicht etwa unbeabsichtigt durch eine Drehung verloren geht. Eine solche Drehung könnte nämlich um einen entlang der Raumachse 1 (Diagonale des Würfels 10) eingesetzten, nicht dargestellten Schraubbolzen erfolgen, für den eine Längsbohrung 18 mit einem den Schraubenkopf bzw. eine Mutter (am anderen Ende) aufnehmenden Bohrungsabschnitt 19 größeren Durchmessers vorgesehen ist. Eine derartige Verzahnung der einander zugekehrten Flächen der beiden Halteteile 3, 3' trägt einerseits zur Stabilität der Verbindung bei, andererseits ermöglicht sie einen größeren Abstand der beiden Kanten 17 voneinander, wodurch die beiden Halteteile 3, 3' mit ihren Armen 7 die Strebe 6 über einen geringeren Winkel als bisher umschließen. Dies könnte sich dahingehend nachteilig auswirken, daß bei ungewollter, nur geringfügiger Verdrehung der beiden Halteteile 3, 3' gegeneinander die Streben 6 aus der Umklammerung durch die Arme 7 gleiten. Eine solche Verdrehung wird aber durch die Verzahnung 16 verhindert.

Andererseits ist man sowohl für die Montage wie auch für die Demontage daran interessiert, einen möglichst geringen Umschlingungswinkel zu haben, weil dann bereits ein geringfügiges Lockern des Schraubbolzens genügt, um die Streben 6 zwischen die Arme 7 einführen oder aus ihnen herauslösen zu können. Z. B. kann bei der Montage die jeweilige Strebe von der Seite her bei nur leicht gelockerter Schraube eingelegt werden, worauf wenige Schraubwindungen genügen, um die Verbindung zu stabilisieren. Auf diese Weise kann eine einzige Person die Montage durchführen, wofür bisher zwei Personen benötigt wurden.

Vorteilhaft ist es, wenn die Verzahnungsflächen 16, d. h. die durch sie gebildeten Vorsprünge und Vertiefungen, bezüglich der Achse 1 rotationsasymmetrisch angeordnet sind, also nicht etwa in einem gleichmäßigen Winkelabstand voneinander. Dadurch wird verhindert, daß die beiden Halteteile 3, 3' falsch aneinandergelegt werden können, weil dann die Vorsprünge nur in einer bestimmten Relativlage der beiden Halteteile 3, 3' zueinander in die zugehörigen Vertiefungen passen. Gegebenenfalls kann dabei für jeden Vorsprung eine andere Querschnittsform und/oder -dimension vorgesehen sein, so daß die dazu passende Vertiefung und damit die richtige Paßlage leichter erkennbar wird.

Eine weitere vorteilhafte Maßnahme kann darin bestehen, daß zwischen den beiden Halteteilen eine Feder 20 (in Fig. 2 strichliert angedeutet) vorgesehen ist. Diese Feder ist gemäß Fig. 2 eine den Schraubbolzen in der Bohrung 18 umgebende und in einer Bohrung größeren Durchmessers sitzende Schraubenfeder; es könnte sich aber — besonders im Falle einer Druckfeder — auch um eine zwischen die Flächen 14 eingesetzte Tellerfeder oder einen Federring handeln. Durch eine solche Druckfeder wird für die Demontage gesichert, daß beim Lösen des Schraubbolzens die beiden Halteteile sofort auseinandergedrückt werden und sich so die Verbindung rasch und sicher löst. Anderseits wäre es im Falle einer Schraubenfeder 20 auch ebenso möglich, eine Zugfeder vorzusehen, die bei der Montage bereits für eine gewisse Klemmwirkung gegenüber der zu befestigenden Strebe sorgt, so daß dem Monteur die Arbeit erleichtert wird. Im allgemeinen wird jedoch eine Druckfeder schon deshalb bevorzugt sein, weil sie keine besonderen Verankerungseinrichtungen benötigt.

Es wurde oben bereits erwähnt, daß für die Anordnung eines dreiarmigen Körpers 3 innerhalb eines sechs Flächen aufweisenden würfelartigen Körpers zwei Möglichkeiten bestehen, die zu einer leicht abgeänderten Ausgestaltung des Halteteiles führen. Dies wird durch die Fig. 4A, 4B und 5A, 5B veranschaulicht, wo in den mit A bezeichneten Figuren die Spitzen 9 der Arme 7 — bei der Draufsicht auf die Grundfläche der abgeschnittenen Eckpyramide — nach links bzw. im Uhrzeigergegensinne weisen, wie durch den Buchstaben « L » zwischen den Kreispfeilen (links oben) angedeutet ist und auch durch auf den Halteteilen angebrachte Pfeile 22 kenntlich gemacht sein kann. Dagegen sind in den mit B bezeichneten Figuren die Spitzen 9 der Arme 7 nach rechts bzw. im Uhrzeigersinne gerichtet, was einerseits in den Figuren rechts oben durch ein « R » in einem entsprechenden Pfeilkreis und anderseits am jeweiligen Halteteil 3 durch Pfeile 22 angegeben ist.

Es ist ferner ersichtlich, daß die Strebe 6 sowohl in den mit A wie auch in den B bezeichneten Figuren zu sehen ist. Stellt man sich nämlich diese Strebe 6 durch beide Figuren A und B durchlaufend vor, so stellt das Verbindungselement der Fig. 4A (oder 5A) die linke Verbindung eines Rahmengestelles dar, hingegen die Fig. 4B (oder 5B) die rechte Verbindung. Auf diese Weise ist also die Strebe 6 an ihrer linken Seite mit einer Strebe 6' bzw. 6" verbunden, an der rechten Seite mit den Streben 106 und 206. Dabei zeigen die beiden Draufsichten auf den jeweiligen rechten Halteteil 3 bzw. den linken Halteteil 103 in den Fig. 4A, 4B, daß die Anordnung der Streben 6, 6' und 6" einerseits und 6, 106 und 206 anderseits völlig spiegelsymmetrisch ist, was bei der bekannten Konstruktion mit gleichartig ausgebildeten Halteteilen nicht möglich war.

Im übrigen zeigen gerade die Seitenansichten der Fig. 5A, 5B die von unten her (teilweise verdeckt durch die Streben 6" und 106) um die Strebe 6 herumgreifenden Gegenhalteteile 3' bzw. 103', die durch einen Inbus-Schraubbolzen 21 an den Halteteil 3 bzw. 103 gezogen sind.

Im übrigen zeigen die Fig. 4A, 4B und 5A, 5B, in welcher Weise die jeweils drei Streben 6, 6' und 6" bzw. 6, 106 und 206 zueinander einen rechten Winkel entlang der drei Raumachsen einschließen bzw. wie die entsprechenden Bohrungsausnehmungen 11, 12 und 13 im jeweiligen Halteteil verlaufen.

Im Rahmen der Erfindung sind zahlreiche Abweichungen von den gezeigten Ausführungsbeispielen möglich ; beispielsweise ist es nicht zwingend erforderlich, daß die Streben 6 stets einen kreiszylindrischen Querschnitt besitzen, vielmehr sind auch ovale, vieleckige und nicht zuletzt auch viereckige Querschnitte, wie überhaupt diesbezüglich beliebige Varianten möglich.

## Patentansprüche

1. Verbindungsanordnung für wenigstens drei entlang der Raumachsen verlaufende Streben, bestehend aus zwei mit einer Außenfläche einem einfachen geometrischen Körper folgenden, miteinander verbindbaren Halteteilen, deren jeweils einander zugekehrte Seite aus einer Schnittfläche durch den geometrischen Körper geformt ist, wobei die Halteteile entlang der Raumachsen verlaufende Bohrungsausnehmungen zur Aufnahme der Streben aufweisen, deren Achsen einander kreuzen, und durch welche Bohrungsausnehmungen jeder Halteteil einen etwa dreiarmigen Körper bildet, dadurch gekennzeichnet, daß der einfache geometrische Körper ein würfelartiger Körper (10) ist, von dem zur Bildung eines Halteteiles (3, 3' ; 103, 103') an den Endpunkten einer Raumdiagonale (1) je eine Eckpyramide abgeschnitten ist und ein weiterer Schnitt zur Ausbildung der dem jeweils anderen Halteteil (3', 3 ; 103', 103) zugekehrten Fläche durch eine im Abstand von der Pyramidengrundfläche verlaufende Trennebene (8) gelegt ist, die senkrecht zu der Raumdiagonale verläuft, und wobei in jedem Halteteil (3, 3', 103, 103') die von der Trennebene (8) ausgehenden, im Querschnitt einem Segment der Streben (6) entsprechenden Bohrungsausnehmungen (11, 12, 13) angeordnet sind.

2. Verbindungsanordnung nach Anspruch 1, dadurch gekennzeichnet, daß die Bohrungsausnehmungen (11, 12, 13) annähernd tangential zu jeweils zwei aneinander grenzenden Flächen des würfelartigen Körpers (10) und innerhalb dieses verlaufen.

3. Verbindungsanordnung nach Anspruch 1 oder 2, dadurch gekennzeichnet, daß die beiden Halteteile (3, 3' ; 103, 103') an der einander jeweils zugekehrten Fläche mit ineinandergreifenden Vorsprüngen und Vertiefungen (16) versehen sind.

4. Verbindungsanordnung nach Anspruch 3, dadurch gekennzeichnet, daß die Vorsprünge und Vertiefungen (16) bezüglich der Raumdiagonale (1) rotationsasymmetrisch angeordnet sind.

5. Verbindungsanordnung nach einem der vorangehenden Ansprüche, dadurch gekennzeichnet, daß eine bolzenartige Verbindungseinrichtung (21) sich mit ihrer Längsachse entlang der Raumdiagonale (1) erstreckt.

6. Verbindungsanordnung nach einem der vorangehenden Ansprüche, dadurch gekennzeichnet, daß die Kantenlänge des würfelartigen Körpers (10) und die Länge der Arme (7) der beiden Halteteile (3, 3' ; 103, 103') für einen gegebenen Durchmesser der Bohrungsausnehmung (11, 12, 13) so bemessen sind, daß die Halteteile die Streben (6) um wenigstens 180 Grad, vorzugsweise maximal um 360 Grad und insbesondere um etwa 250 bis 300 Grad, umschließen.

7. Verbindungsanordnung nach einem der vorangehenden Ansprüche, dadurch gekennzeichnet, daß zwischen zwei Halteteilen (3, 3') eine Feder (20), insbesondere eine Druckfeder, vorgesehen ist (Fig. 2).

8. Verbindungsanordnung nach einem der vorangehenden Ansprüche, mit vier Halteteilpaaren zur Verbindung von acht Streben, wobei vier Streben ein in einer Ebene liegendes Viereck bilden und die anderen vier Streben von den vier Eckpunkten des Vierecks ausgehend senkrecht von der Ebene abstehen, dadurch gekennzeichnet, daß je zwei Halteteilpaare (103, 103') spiegelbildlich zu den anderen zwei Halteteilpaaren (3, 3') ausgebildet sind.

### Claims

1. Coupling system for at least three struts extending along spatial co-ordinates, comprising two holding elements which with an external surface define a simple geometrical body and are connectable to one another, and the respective mutually facing sides of which are each formed by a sectioning surface through the geometrical body, wherein the holding elements comprise bored recesses extending along the spatial co-ordinates to receive the struts, the axes of which intersect one another and through which bored recesses each holding element forms a body of some three arms, characterised in that the simple geometrical body is a cube-like body (10) from which for the purpose of forming a holding element (3, 3' ; 103, 103') a corner pyramid is cut off at each of the end points of a spatial diagonal (1) and that a further cut to produce the surface turned towards the other holding element (3', 3 ; 103', 103) in each case is taken along a separating plane (8) spaced from the base surface of the pyramid and extending perpendicularly to the spatial diagonal, the bored recesses (11, 12, 13), starting from the separating plane (8) and cross-sectionally matching a segment of the struts (6), being situated in each holding element (3, 3' ; 103, 103').

2. Coupling system according to claim 1, characterised in that the bored recesses (11, 12, 13) extend approximately tangentially in each case to two mutually contiguous surfaces of the cubic body (10) and within the latter.

3. Coupling system according to claim 1 or 2, characterised in that the two holding elements (3, 3' ; 103, 103') are provided on their respective mutually facing surfaces with interengaging projections and depressions (16).

4. Coupling system according to claim 3, characterised in that the projections and depressions (16) are positioned in rotational symmetry with respect to the spatial diagonal (1).

5. Coupling system according to one of the preceding claims characterised in that a bolt-type coupling device (21) extends with its longitudinal axis along the spatial diagonal (1).

6. Coupling system according to one of the preceding claims, characterised in that the edge length of the cubic body (10) and the length of the arms (7) of the two holding elements (3, 3' ; 103, 103') are so dimensioned for a given diameter of the bored recess (11, 12, 13) that the holding elements enflank the struts (6) over at least 180° preferably over a maximum of 360° and especially over about 250 to 300°.

7. Coupling system according to one of the preceding claims, characterised in that a spring (20), especially a compression spring, is provided between two holding elements (3, 3') (Fig. 2).

8. Coupling system according to one of the preceding claims, with four pairs of holding elements for coupling eight struts, wherein four struts form a quadrilateral lying in one plane and the other four struts project out of the plane at right angles thereto starting from the corner points of the quadrilateral, characterised in that each two pairs of holding elements (103, 103') are constructed as mirror images of the two other pairs of holding elements (3, 3').

### Revendications

1. Agencement d'assemblage pour au moins trois barres d'ossature disposées en trièdre rectangle constitué par deux pièces de maintien qui ont une surface extérieure suivant la forme d'un corps géométrique simple, peuvent être assemblées l'une à l'autre et ont leurs faces mutuellement en regard formées chacune par une surface coupant le corps géométrique, les pièces de maintien présentant des creux à profil courbe qui longent les axes du trièdre rectangle afin de recevoir les barres d'ossature dont les axes se croisent, lesdits creux à profil courbe ayant pour effet que chaque pièce de maintien présente sensiblement la forme d'un corps à trois bras, caractérisé par le fait que le corps géométrique simple est un corps du genre cube (10) qui, pour former une pièce de maintien (3, 3' ; 103, 103'), a subi, à chacune des extrémités d'une diagonale (1) joignant des sommets opposés, l'ablation d'une pyramide dont le sommet est un sommet du cube, et qui, pour former la surface tournée vers la pièce de maintien conjuguée (3', 3 ; 103', 103), est en outre coupé selon un plan de séparation (8) passant à distance de la surface de base de ladite pyramide et perpendiculaire à ladite diagonale, les creux à profil courbe (11, 12, 13), partant du plan de séparation (8) et correspondant en coupe transversale à un segment des barres d'ossature (6), étant agencés dans chaque pièce de maintien.

2. Agencement d'assemblage selon la revendication 1, caractérisé par le fait que les creux à profil courbe (11, 12, 13) sont approximativement tangents chacun à deux surfaces adjacentes du corps du genre cube (10) et passent à l'intérieur de celui-ci.

3. Agencement d'assemblage selon la revendication 1 ou 2, caractérisé par le fait que les deux pièces de maintien (3, 3' ; 103, 103') sont munies, dans chacune des surfaces mutuellement en regard, de saillants et dépressions (16) venant mutuellement en prise.

4. Agencement d'assemblage selon la revendication 3, caractérisé par le fait que les saillants et dépressions (16) sont aménagés avec une symétrie de rotation par rapport à ladite diagonale (1).

5. Agencement d'assemblage selon l'une des revendications précédentes, caractérisé par le fait que l'axe longitudinal d'un dispositif d'assemblage du genre boulon (21) s'étend le long de ladite diagonale (1).

6. Agencement d'assemblage selon l'une des revendications précédentes, caractérisé par le fait que la longueur d'arête du corps du genre cube (109) et la longueur des bras (7) des deux pièces de maintien (3, 3' ; 103, 103') sont de valeur telle que, pour un diamètre donné du creux à profil courbe (11, 12, 13), les pièces de maintien entourent les barres d'ossature (6) sur au moins 180 degrés, de préférence au maximum sur 360 degrés et en particulier sur environ 250 à 300 degrés.

7. Agencement d'assemblage selon l'une des revendications précédentes, caractérisé par le fait qu'un ressort (20), notamment un ressort de compression, est prévu entre deux pièces de maintien (3, 3') (Fig. 2).

8. Agencement d'assemblage selon l'une des revendications précédentes, avec quatre paires de pièces de maintien pour assembler huit barres d'ossature, quatre barres formant un rectangle situé dans un plan et les quatre autres barres partant des quatre coins du rectangle et s'éloignant du plan perpendiculairement, caractérisé par le fait que chaque couple de paires de pièces de maintien (103, 103') est agencé selon une symétrie de miroir par rapport à l'autre couple de paires de pièces de maintien (3, 3').

FIG 1

FIG 2

FIG 3

FIG 4a

FIG 4b

FIG 5a

FIG 5b